# EUROPÄISCHE PATENTANMELDUNG

(11) **EP 2 644 423 A2**
(43) Veröffentlichungstag der Anmeldung: **02.10.2013**
(21) Anmeldenummer: 13160846.5
(22) Anmeldetag: 25.03.2013
(51) Int. Cl.: B60J 7/22

(54) **Windabweiser**

(30) Priorität: 28.03.2012 DE 102012102671
(71) Anmelder: Scambia Holdings Cyprus Limited, 3106 Limassol (CY)
(72) Erfinder: Neumann, Peter, 71720 Oberstenfeld (DE); Wegner, Bert, 73333 Gingen (DE); Riehle, Jörg, 71679 Asperg (DE)
(74) Vertreter: Hoeger, Stellrecht & Partner Patentanwälte

(57) **Zusammenfassung**

Um bei einem Windabweiser zum Einbau in ein Fahrzeugdach in einem Frontbereich, umfassend einen sich in einer quer zu einer Fahrtrichtung in einer Erstreckungsrichtung erstreckenden Windabweiserkörper, eine Hubeinrichtung, mit welcher der Windabweiserkörper zwischen einer in das Fahrzeugdach eingefahrenen und einer aus dem Fahrzeugdach ausgefahrenen und über eine Oberseitenkontur des Fahrzeugdachs überstehenden und somit windabweisenden Stellung bewegbar ist, wobei die Hubeinrichtung mindestens eine Hubeinheit mit einer Einbaubasis und einem relativ zur Einbaubasis mit einem Hubarmlager um eine erste Schwenkachse schwenkbar gelagerten Hubarm aufweist, welcher an einem dem Hubarmlager gegenüberliegenden Ende am Windabweiserkörper angreift, mit mechanisch möglichst einfachen Mitteln eine zuverlässige Bewegbarkeit des Windabweiserkörpers zu erreichen, wird vorgeschlagen, dass zur Bewegung des Hubarms eine sich an der Einbaubasis abstützende Betätigungseinheit vorgesehen ist, welche am Hubarm angreift, und dass zum Verschwenken des Hubarms die Betätigungseinheit und das Hubarmlager relativ zueinander in einer quer zu der ersten Schwenkachse des Hubarmlagers verlaufenden Verschieberichtung verschiebbar sind.

## Beschreibung

Die Erfindung betrifft einen Windabweiser zum Einbau in einen Frontbereich eines Fahrzeugdachs insbesondere zwischen einer Frontscheibe und einem Dachausschnitt, umfassend einen sich in einer quer zu einer Fahrtrichtung in einer Erstreckungsrichtung erstreckenden Windabweiserkörper, eine Hubeinrichtung, mit welcher der Windabweiserkörper einer in das Fahrzeugdach eingefahrenen und einer aus dem Fahrzeugdach ausgefahrenen und über eine Oberseitenkontur des Fahrzeugdachs überstehenden und somit insbesondere allseits umströmten windabweisenden Stellung bewegbar ist, wobei die Hubeinrichtung mindestens eine Hubeinheit mit einer Einbaubasis und einem relativ zu Einbaubasis mit einem Hubarmlager um eine erste Schwenkachse schwenkbar gelagerten Hubarm aufweist, welcher an einem dem Hubarmlager gegenüberliegenden Ende am Windabweiserkörper angreift.

Derartige Windabweiser sind aus dem Stand der Technik, beispielsweise der EP 0 895 889 A1 bekannt.

Bei dieser bekannten Lösung besteht allerdings die Aufgabe, mit mechanisch möglichst einfachen Mitteln eine zuverlässige Bewegbarkeit des Windabweiserkörpers zu erreichen.

Diese Aufgabe wird bei einem Windabweiser der eingangs beschriebenen Art erfindungsgemäß dadurch gelöst, dass zur Bewegung des Hubarms eine sich an der Einbaubasis abstützende Betätigungseinheit vorgesehen ist, welche am Hubarm angreift, und das zum Verschwenken des Hubarms die Betätigungseinrichtung und das Hubarmlager relativ zueinander in einer quer zu der ersten Schwenkachse des Hubarmlagers verlaufenden Verschieberichtung verschiebbar sind.

Der Vorteil der erfindungsgemäßen Lösung besteht darin, dass dadurch eine einfache Betätigung des Hubarms realisierbar ist, die einerseits erlaubt, den Windabweiserkörper zwischen der eingefahrenen Stellung und der ausgefahrenen Stellung zu bewegen und andererseits sowohl in der ausgefahrenen als auch in der eingefahrenen Stellung sicher zu halten.

Eine derartige relative Verschiebung der Betätigungseinrichtung und des Hubarmlagers lässt sich auf unterschiedlichste Art und Weise realisieren.

So sieht eine vorteilhafte Lösung vor, dass zur Verschiebung der Betätigungseinheit und des Hubarmlagers relativ zueinander ein in der Verschieberichtung verschiebbarer Verschiebeschlitten vorgesehen ist.

Ein derartiger Verschiebeschlitten stellt eine einfach zu realisierende mechanische Komponente dar.

Insbesondere ist dabei vorgesehen, dass der Verschiebeschlitten mittels einer Verschiebeführung an der Einbaubasis geführt ist, so dass dadurch die Betätigungseinheit einfach und kostengünstig realisierbar ist.

Zur Kopplung zwischen der Betätigungseinheit und dem Hubarm wurden dabei keine näheren Angaben gemacht, beispielsweise könnte die Betätigungseinheit mit dem Hubarm ein Schwenkhebelsystem oder ein Kniehebelsystem bilden.

Eine vorteilhafte Lösung sieht vor, dass die Betätigungseinheit an einer Führungsbahn des Hubarms mit einem längs der Führungsbahn verschiebbaren Führungselement angreift. Dass das Führungselement zum Verschwenken des Hubarms längs der Führungsbahn bewegbar ist.

Somit besteht eine mechanisch einfach ausgebildete Lösung zur Kopplung zwischen der Betätigungseinheit und dem Hubarm.

Zweckmäßigerweise ist dabei vorgesehen, dass die Führungsbahn in Längsrichtung des Hubarms verläuft.

Ferner ist vorzugsweise vorgesehen, dass das Führungselement relativ zur Führungsbahn verschwenkbar ist.

Insbesondere sieht eine konkrete Realisierung der Betätigungseinheit vor, dass die Betätigungseinheit einen das Führungselement tragenden Betätigungsarm aufweist, welcher sich ausgehend von einer Betätigungsbasis erstreckt.

Bei den bislang beschriebenen Lösungen wurde lediglich von einer Relativbewegung der Betätigungseinheit und des Hubarmlagers zueinander ausgegangen.

Dabei besteht die Möglichkeit, entweder die Betätigungseinheit oder das Hubraumlager oder beide gleichzeitig zu bewegen, um diese Relativbewegung zu erzeugen.

Konstruktiv besonders günstig hat es sich jedoch erwiesen, wenn der in der Verschieberichtung relativ zum Hubarmlager verschiebbare Verschiebeschlitten die Betätigungsbasis bildet.

Insbesondere ist dabei vorgesehen, dass das Hubarmlager fest an der Einbaubasis angeordnet ist, während der Verschiebeschlitten relativ zur Einbaubasis verschiebbar ist.

Hinsichtlich der Kopplung zwischen dem Hubarm und dem Windabweiserkörper wurden bislang keine näheren Angaben gemacht.

So sieht eine besonders günstige Lösung vor, dass der Hubarm mit seinem an dem Windabweiserkörper angreifenden Ende mittels einer Halteführung mit dem Windabweiserkörper gekoppelt ist und diesen relativ zur Einbaubasis in den jeweiligen Stellungen hält.

Diese Lösung schafft in besonders vorteilhafter Weise die Möglichkeit, eine ausreichend zuverlässige und die einzelnen Stellungen definiert vorgebende Kopplung zwischen dem Hubarm und dem Windabweiserkörper zu erhalten.

Insbesondere ist dabei vorgesehen, dass durch die Halteführung der Hubarm relativ zum Windabweiserkörper um eine zur ersten Schwenkachse parallele zweite Schwenkachse verschwenkbar ist.

Insbesondere ist dabei vorgesehen, dass die zweite Schwenkachse quer zur Erstreckungsrichtung des Windabweiserkörpers verläuft.

Eine weitere vorteilhafte Lösung sieht vor, dass die Halteführung einerseits ein Schwenken des Hubarms um die zweite Schwenkachse und andererseits ein Bewegen der zweiten Schwenkachse in Erstreckungsrichtung des Windabweiserkörpers erlaubt.

Damit besteht auch die Möglichkeit, das Hubarmlager stationär relativ zur Einbaubasis anzuordnen und andererseits dann durch die Halteführung die Möglichkeit zu schaffen, dass sich das an der Halteführung angreifende Ende des Hubarms relativ zum Windabweiserkörper in dessen Erstreckungsrichtung bewegt.

Eine derartige Bewegung lässt sich insbesondere dadurch realisieren, dass die Halteführung eine Kulissenbahn aufweist, längs welcher ein die zweite Schwenkachse bildender Führungszapfen bewegbar ist.

Um ferner zu verhindern, dass sich der Windabweiser in seiner Erstreckungsrichtung bewegt, wenn ein Bewegen desselben durch die Hubeinheiten zwischen der eingefahrenen und der ausgefahrenen Stellung erfolgen soll, ist vorzugsweise vorgesehen, dass der Windabweiserkörper durch eine Führungseinheit geführt ist, welche eine Bewegung des Windabweiserkörpers in der Erstreckungsrichtung verhindert.

Die Führungseinheit könnte dabei eine einfache Linearführung sein, wobei eine Linearführung für einen Einbau im Bereich eines Fahrzeugdachs problematisch, wenn nicht ungeeignet ist.

Aus diesem Grund sieht eine vorteilhafte Lösung vor, dass die Führungseinheit eine Kniehebelführung aufweist.

Eine Kniehebelführung lässt sich in einfacher Weise ausklappen und zusammenklappen, so dass sich diese vorteilhaft im Bereich eines Fahrzeugdachs einsetzen lässt.

Zweckmäßigerweise ist vorgesehen, dass die Kniehebelführung um Gelenkachsen schwenkbar ist, die quer zur ersten Schwenkachse verlaufen.

Insbesondere ist vorgesehen, dass die Gelenkachsen der Kniehebelführung senkrecht zur ersten Schwenkachse verlaufen.

Im Zusammenhang mit der bisherigen Erläuterung der einzelnen Ausführungsbeispiele wurde lediglich davon ausgegangen, dass die Hubeinrichtung mindestens eine Hubeinheit aufweist.

Zur stabilen Führung des Windabweiserkörpers ist es jedoch von Vorteil, wenn die Hubeinrichtung mehrere Hubeinheiten aufweist.

Zweckmäßigerweise sind derartige mehrere Hubeinheiten symmetrisch zur Längsmittelebene des Fahrzeugdachs angeordnet.

Darüber hinaus ist vorteilhafterweise vorgesehen, dass die mindestens eine Hubeinheit oder die Hubeinheiten durch eine gemeinsame Antriebseinheit antreibbar sind.

Eine derartige gemeinsame Antriebseinheit könnte seitlich im Fahrzeugdach vorgesehen sein.

Aus Gründen eines vorteilhaften Einbaus hat es sich jedoch als zweckmäßig erwiesen, wenn die Antriebseinheit in einem mittigen Bereich des Windabweisers angeordnet ist.

Ferner hat es sich als zweckmäßig erwiesen, wenn die Antriebseinheit als Linearantrieb ausgebildet ist, da sich mit einem Linearantrieb die erfindungsgemäß vorgesehenen Hubeinheiten vorteilhafterweise antreiben lassen.

Eine besonders günstige Einbausituation ergibt sich dann, wenn die Antriebseinheit auf gegenüberliegenden Seiten derselben angeordnete Hubeinheiten synchron miteinander antreibt.

Eine besonders günstige Lösung sieht vor, dass die Antriebseinheit symmetrisch zur Längsmittelebene des Fahrzeugdachs verlaufende Schub-Zug-Bewegungen ausführt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines erfindungsgemäßen Kraftfahrzeugs mit einem Windabweiser;
- Fig. 2: eine perspektivische Ansicht von vorne auf einen Karosserieausschnitt für im Bereich der Frontscheibe mit einem in der eingefahrenen Stellung stehenden Windabweiserkörper des Windabweisers;
- Fig. 3: eine perspektivische Ansicht ähnlich Fig. 2 eines Windabweisers mit in ausgefahrener Stellung stehendem Windabweiserkörper;
- Fig. 4: eine Ansicht in Richtung des Pfeils A in Fig. 3 des erfindungsgemäßen Windabweisers in der ausgefahrenen Stellung;
- Fig. 5: eine Ansicht in Richtung eines Pfeils B in Fig. 3 mit einer Explosionsdarstellung des erfindungsgemäßen Windabweisers mit in ausgefahrener Stellung stehendem Windabweiserkörper;
- Fig. 6: eine vergrößerte Teilansicht eines Bereichs B in Fig. 4 mit Darstellung des Windabweiserkörpers in seiner eingefahrenen Stellung;
- Fig. 7: einen Schnitt längs Linie 7-7 in Fig. 6;
- Fig. 8: eine Ansicht ähnlich Fig. 6 mit Darstellung des Windabweiserkörpers in einer Zwischenstellung zwischen der eingefahrenen und der ausgefahrenen Stellung;
- Fig. 9: einen Schnitt längs Linie 9-9 in Fig. 8;
- Fig. 10: eine Ansicht ähnlich Fig. 8 mit gestrichelt dargestellten nicht in Fig. 8 erkennbaren Teilen;
- Fig. 11: eine schematische Teildarstellung von auf einer Seite der Längsmittelebene angeordneten Hubeinheiten in einer Perspektive ähnlich Fig. 4 mit einer Antriebseinheit und einer Stellung der Hubarme, welche der ausgefahrenen Stellung des Windabweiserkörpers entspricht;
- Fig. 12: eine Ansicht in Richtung des Pfeils C in Fig. 11;
- Fig. 13: eine Ansicht ähnlich Fig. 11 mit einer Stellung der Hubarme, die zwischen der ausgefahrenen und der eingefahrenen Stellung des Windabweiserkörpers liegt;
- Fig. 14: eine Darstellung ähnlich Fig. 12 in der Stellung in Fig. 13;
- Fig. 15: eine Darstellung ähnlich Fig. 11, mit einer Stellung der Hubarme, die der eingefahrenen Stellung des Windabweiserkörpers entspricht, und
- Fig. 16: eine Ansicht ähnlich Fig. 12 der Stellung in Fig. 15.

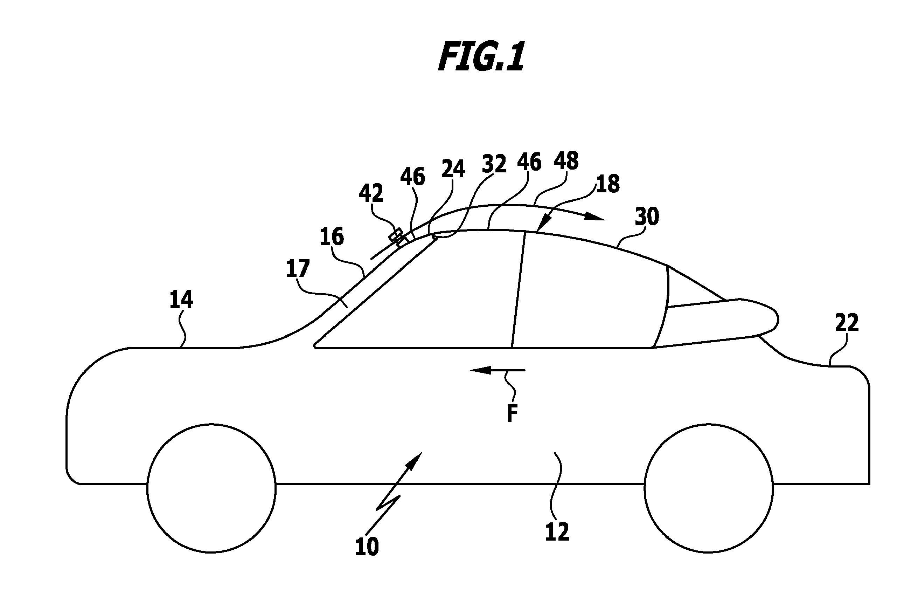

Ein in Fig. 1 dargestelltes und als Ganzes mit 10 bezeichnetes Kraftfahrzeug, insbesondere ein Cabriofahrzeug, weist eine Fahrzeugkarosserie 12 auf, die unter anderem - in entgegengesetzter Richtung zu einer Fahrtrichtung F betrachtet - eine Motorhaube 14, eine im Anschluss an die Motorhaube 14 angeordnete Frontscheibe 16, ein sich an die Frontscheibe 16 anschließendes Fahrzeugdach 18, gegebenenfalls eine Heckscheibe 20 und eine Kofferraumklappe 22 umfasst.

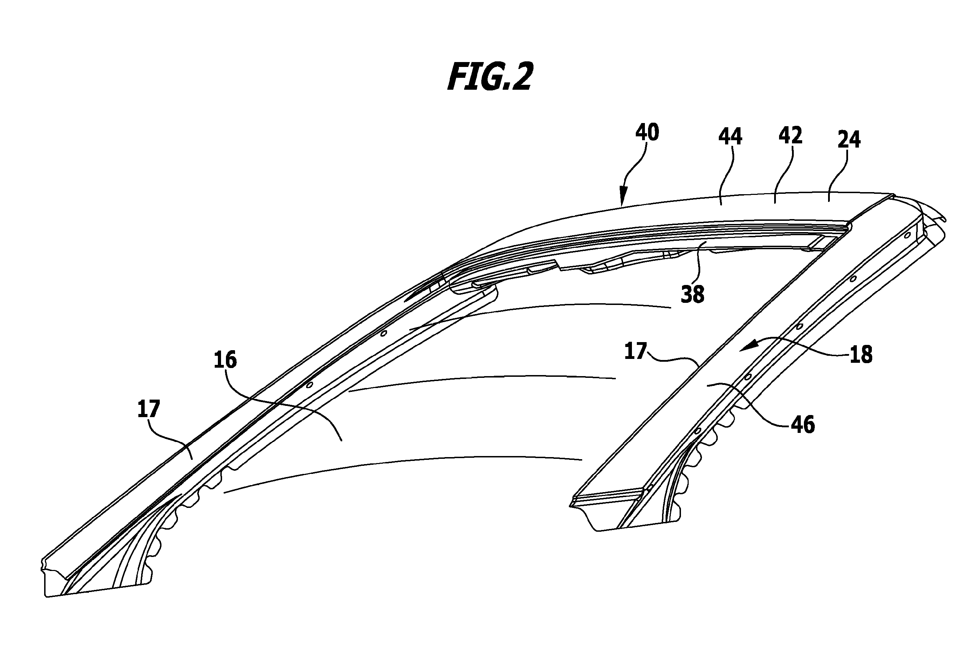

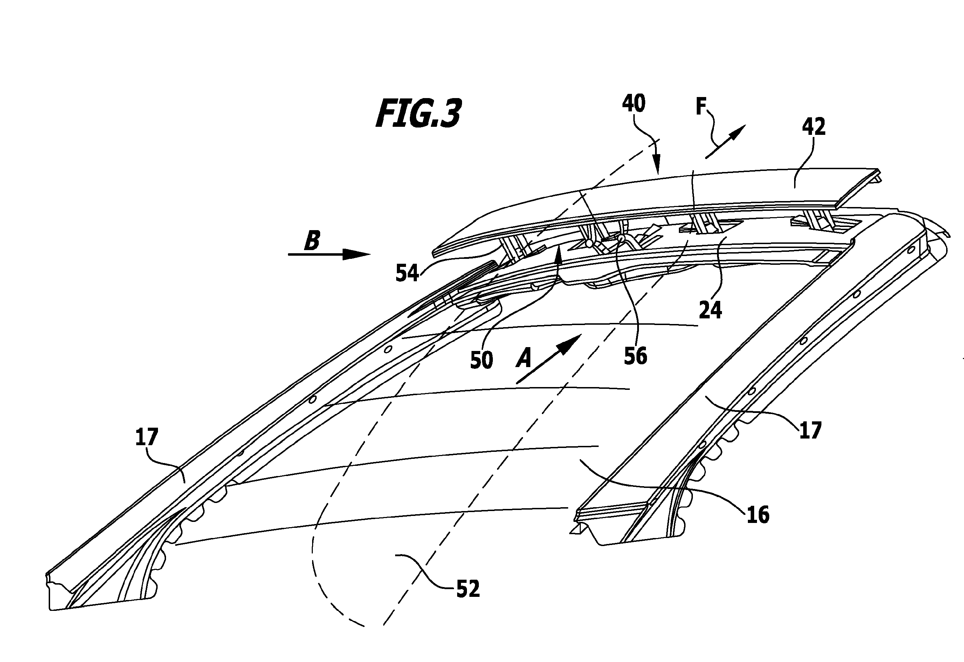

Wie in Fig. 2 und Fig. 3 dargestellt, schließt sich an die, zwischen A-Säulen 17 der Fahrzeugkarosserie 12 liegende, Frontscheibe 16, ein Frontbereich 24 des Fahrzeugdachs 18 an, wobei das Fahrzeugdach 18 gemäß Fig. 1 mit einem auf den Frontbereich 24 folgenden verschließbaren Dachausschnitt 30 versehen ist, welcher durch einen nicht dargestellten beweglichen Dachabschnitt verschlossen oder freigegeben werden kann. Ein derartiger beweglicher Dachabschnitt kann beispielsweise durch ein Faltdach oder ein versenkbares oder ein abnehmbares Dach gebildet sein.

Der Dachausschnitt 30 erstreckt sich über einen Teil des Fahrzeugdachs 18 und weist entgegengesetzt zur Fahrtrichtung F eine Ausdehnung auf, die größer ist als eine Ausdehnung eines gegebenenfalls noch verbliebenen geschlossenen Dachabschnitts.

Um bei freigegebenem Dachausschnitt 30 Zugerscheinungen im Innenraum der Fahrzeugkarosserie 12, insbesondere im Bereich der Fahrgäste, zu vermeiden, ist zwischen der Frontscheibe 16 und einer Vorderkante 32 des Dachausschnitts 30 in dem die A-Säulen 17 verbindenden Frontbereich 24 ein Windabweiser 40 vorgesehen, welcher einen Windabweiserkörper 42 aufweist, der, wie in Fig. 2 dargestellt, in einer eingefahrenen Position so positionierbar ist, dass eine Oberseite 44 des Windabweiserkörpers mit einer Oberseitenkontur 46 der Fahrzeugkarosserie 12 am Übergang zwischen Frontscheibe 16 und Fahrzeugdach 18 und im Frontbereich 24 fluchtet, das heißt nicht über diese übersteht und den optischen Gesamteindruck der Oberseitenkontur 46 nicht beeinträchtigt.

In dieser Stellung ist der Windabweiserkörper 42 jedoch unwirksam.

Wie in Fig. 3 dargestellt, ist der Windabweiserkörper 42 in eine über der Oberseitenkontur 46 des Fahrzeugdachs 18 mit Abstand zur Oberseitenkontur des Fahrzeugdachs angeordnete ausgefahrene Stellung bewegbar, in welcher der Windabweiserkörper 42 insbesondere allseits umströmt ist und eine Führung einer Luftströmung 48 über das Fahrzeugdach 18 derart bewirkt, dass die Luftströmung 48 nicht oder nur in geringem Maße durch den Dachausschnitt 30 in den Innenraum der Fahrzeugkarosserie 12 eintritt.

Hierzu ist, wie in Fig. 3 dargestellt, eine Hubeinrichtung 50 vorgesehen, welche beispielsweise symmetrisch zu einer Längsmittelebene 52 der Fahrzeugkarosserie 12 und beiderseits derselben angeordnete Hubeinheiten 54 sowie eine Führungseinheit 56 für den Windabweiserkörper 42 aufweist.

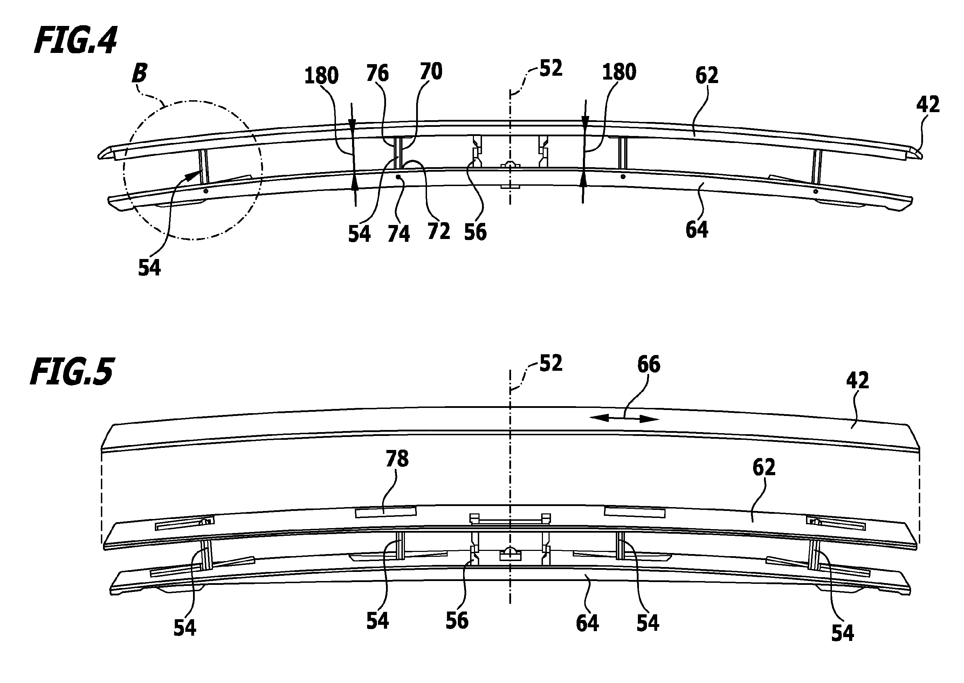

Wie in Fig. 4 und Fig. 5 dargestellt, wird der Windabweiserkörper 42 von beispielsweise einem Träger 62 gehalten, welcher durch die Hubeinheiten 54, beispielsweise jeweils zwei beiderseits der Längsmittelebene 52 und symmetrisch zu dieser angeordnete Hubeinheiten 54, relativ zu einer zwischen der Frontscheibe 16 und der Vorderkante 32 des Dachausschnitts 30 im Frontbereich 24 des Fahrzeugdachs 18 integrierten Einbaubasis 64 bewegbar ist, wobei die jeweiligen Hubeinheiten 54 an der Einbaubasis 64 angeordnet sind und je nach Stellung derselben den Träger 62 mit dem Windabweiserkörper 42 in der in Fig. 4 und 5 dargestellten über die Oberseitenkontur 46 des Fahrzeugdachs 18 ausgefahrenen Stellung halten oder den Träger 62 in eine eingefahrene Stellung bewegen, in welcher der Träger 62 in geringem Abstand zu der Einbaubasis 64 angeordnet ist oder auf dieser aufliegt.

Darüber hinaus ist die Führungseinheit 56 so ausgebildet, dass sie den Träger 62 mitsamt dem Windabweiserkörper 42 quer zur Längsmittelebene 52 unverschieblich führt, wobei die Funktion der Führungseinheit 56 im Einzelnen nachfolgend noch erläutert wird.

Wie in den Fig. 4 und 5 dargestellt, umfasst jede der Hubeinheiten 54 einen Hubarm 70, welcher mit einem ersten Ende 72 um eine erste Schwenkachse 74 drehbar an der Einbaubasis 64 gelagert ist und mit einem anderen zweiten Ende 76 an einer Halteführung 78 des Trägers 62 angreift.

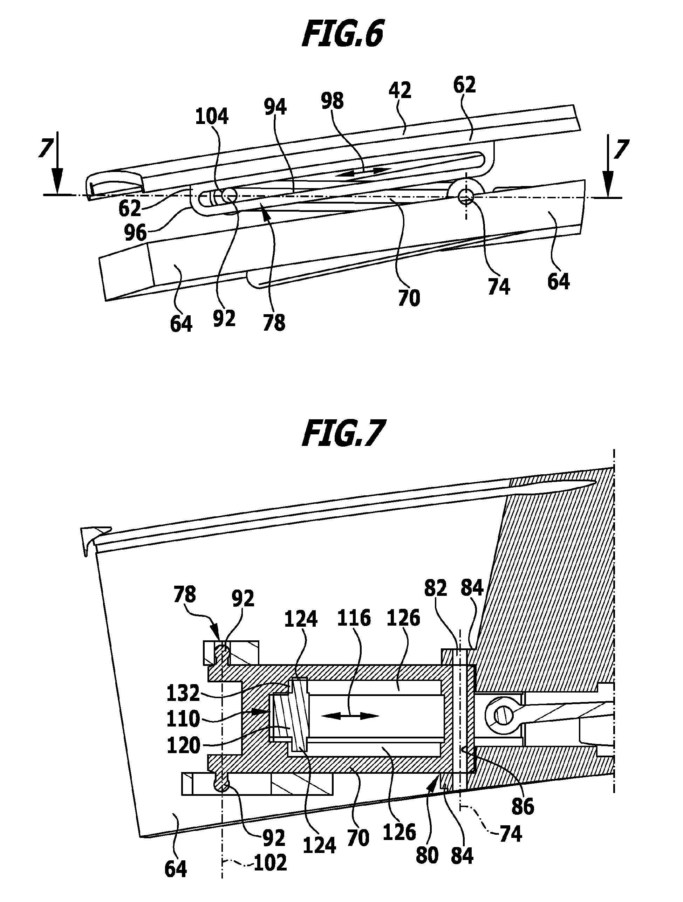

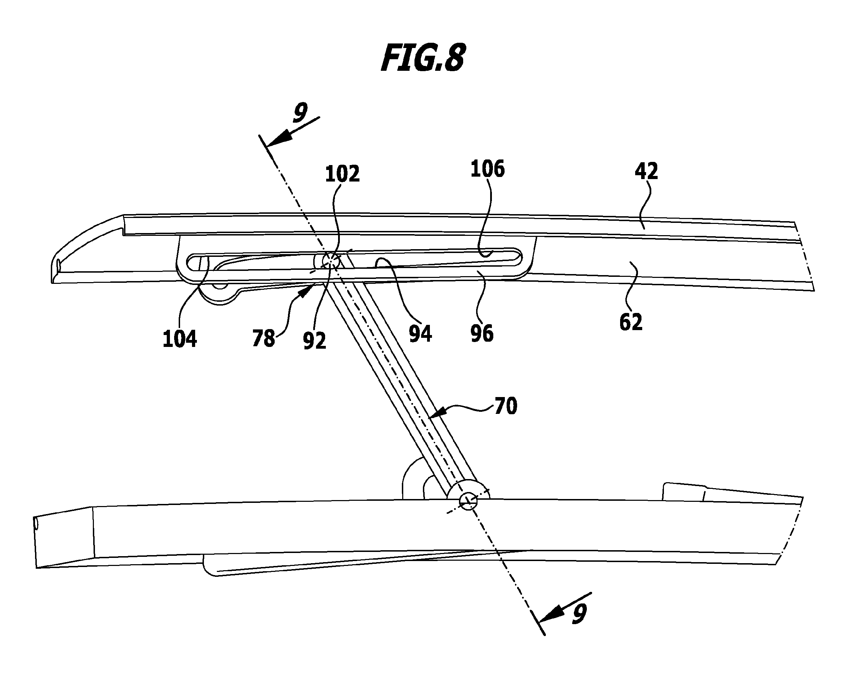

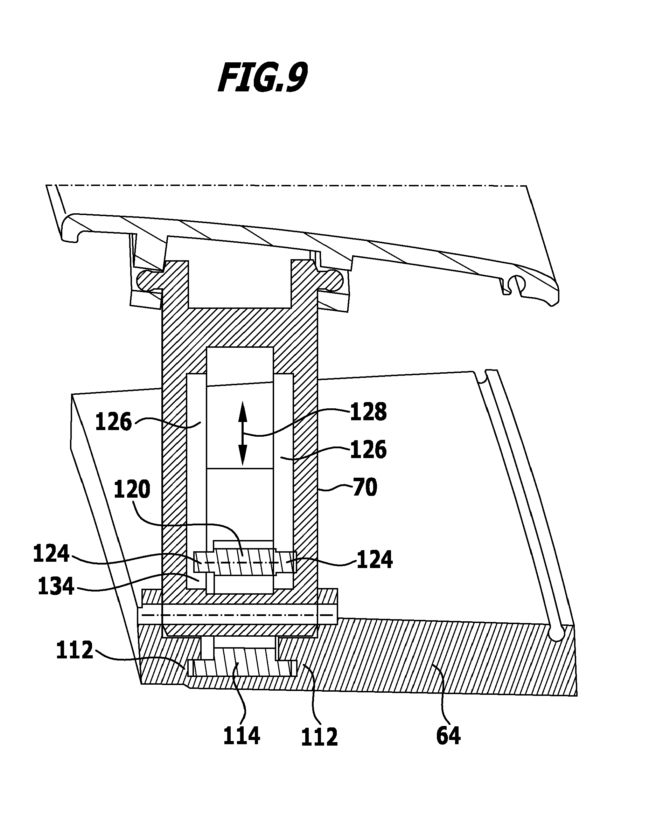

Wie in Fig. 6 und 7, die die eingefahrene Stellung einer Hubeinheit zeigen, sowie in Fig. 8 und 9, die die ausgefahrene Stellung einer Hubeinheit zeigen, dargestellt, verläuft die erste Schwenkachse 74, um welche der jeweilige Hubarm 70 relativ zur Einbaubasis 64 verschwenkbar ist, ungefähr parallel zur Längsmittelebene 52.

In der eingefahrenen Stellung liegt dabei der Hubarm 70 so weit in Richtung der Einbaubasis 64 verschwenkt, dass dieser mit der Einbaubasis 64 beispielsweise einen Winkel von < 20°, noch besser einen Winkel von < 15° einschließt.

Dabei erstreckt sich der Hubarm 70 relativ zur Einbaubasis 64 von einem die erste Schwenkachse 74 festlegenden Hubarmlager 80 weg, bis zur Halteführung 78, die mit dem Träger 62 für den Windabweiserkörper 42 verbunden ist.

Beispielsweise ist das Hubarmlager 80 gebildet durch einen Bolzen 82, welcher Aufnahmen 84 in der Einbaubasis 64 durchsetzt sowie eine Bolzenaufnahme 86 durchgreift, welche im jeweiligen Hubarm 70 vorgesehen ist.

Beispielsweise ist der Bolzen 82 entweder in den Aufnahmen 84 oder in der Bolzenaufnahme 86 drehbar, so dass dadurch ein Verschwenken des Hubarms 70 relativ zur Einbaubasis 64 möglich ist.

Die Halteführung 78 wird gebildet durch beiderseits des Hubarms 70 von diesem abstehende Führungszapfen 92, von denen jeder der Führungszapfen 92 in eine Kulissenbahn 94 einer Führungsleiste 96 der Halteführung 78 eingreift, wobei die Führungsleiste 96 an dem Träger 62 gehalten ist.

Die Führungszapfen 92 sind somit einerseits in einer Längsrichtung 98 der Kulissenbahn 94 bewegbar, und um eine zweite Schwenkachse 102 relativ zur Kulissenbahn 94 und somit auch zur Führungsleiste 96 drehbar.

Die zweite Schwenkachse 102 verläuft dabei insbesondere parallel zur ersten Schwenkachse 74 und beide Schwenkachsen 74 und 102 sind vorzugsweise im Wesentlichen parallel zur Längsmittelebene 52 ausgerichtet, das heißt, dass diese mit der Längsmittelebene 52 bestenfalls einen Winkel von maximal 10° einschließen, während sich der Windabweiserkörper 42 mit seiner Erstreckungsrichtung 66 quer zur Längsmittelebene 52 und somit auch quer zu den Schwenkachsen 74 und 102 erstreckt.

Durch Verschwenken der Hubarme 70 um die Schwenkachse 74 lassen sich somit der Windabweiserkörper 42 mit dem Träger 62 von der in den Fig. 6 und 7 dargestellten eingefahrenen Stellung in die in Fig. 8 und 9 dargestellte ausgefahrene Stellung bewegen, wobei die Halteführung 78 die Möglichkeit eröffnet, dass sich einerseits die Führungszapfen 92 relativ zur Führungsleiste 96 um die zweite Schwenkachse 102 verdrehen können und gleichzeitig noch längs der Kulissenbahn 94 der Führungsleiste 96 von einem Endbereich 104 der Kulissenbahn 94, beispielsweise einem bezüglich der Längsmittelebene 52 außen liegenden Endbereich 104 der Kulissenbahn 94, in einen gegenüberliegenden Endbereich 106 der Kulissenbahn 94, beispielsweise einen bezogen auf die Längsmittelebene 52 innen liegenden Endbereich 106 der Kulissenbahn 94, wandern können.

Damit lassen sich die zweiten Enden 76 der Hubarme 70 relativ zu dem Träger 62 bewegen, ohne dass der Träger 62 eine Verschiebung quer zur Längsmittelebene 52 erfährt.

Zum Verschwenken des Hubarms 70 der jeweiligen Hubeinheit 54 ist eine als Ganzes mit 110 jeweils bezeichnete Betätigungseinheit vorgesehen.

Diese Betätigungseinheit 110 umfasst einen in der Einbaubasis 64 durch eine Verschiebeführung 112 verschiebbar geführten Verschiebeschlitten 114, wobei der Verschiebeschlitten 114 vorzugsweise beidseits durch jeweils eine Verschiebeführung 112 geführt ist und somit in einer Verschieberichtung 116 bewegbar ist, die quer, vorzugsweise senkrecht zu den der ersten Schwenkachse 74 verläuft.

Von dem Verschiebeschlitten 114 ausgehend erstreckt sich ein Betätigungsarm 120, der, wie in den Fig. 7 und 9 dargstellt, an einem dem Verschiebeschlitten 114 abgewandten Endbereich 122 seitliche Fortsätze 124 trägt, die in sich längs des jeweiligen Hubarms 70 erstreckende Gleitführungsbahnen 126 eingreifen und sich somit längs der Gleitführungsbahnen 126 in einer Längsrichtung 128 des jeweiligen Hubarms 70 bewegen können.

Die Fortsätze 124 sind dabei beispielsweise relativ zum Verschiebeschlitten 114 so angeordnet, dass sich die Fortsätze 124 längs einer Bahn 130 bewegen können, die parallel zu den Verschiebeführungen 112 jedoch im Abstand von diesen verläuft, und vorzugsweise so, dass die Bahn 130 auf einer dem Windabweiserkörper 42 zugewandten Seite der ersten Schwenkachse 74 verläuft.

Das Bewegen der Fortsätze 124 längs der Bahn 130 hat nun zur Folge, dass dann, wenn die Fortsätze 124 einen maximalen Abstand von der Schwenkachse 74 aufweisen, die Fortsätze 124, wie beispielsweise in Fig. 7 dargestellt, in einem der Halteführung 78 nächstliegenden Endbereich 132 der Gleitführungsbahnen 126 liegen, so dass in diesem Fall der jeweilige Hubarm 70 einen minimalen Winkel mit der Einbaubasis 64 einschließt, während die Fortsätze 124 dann, wenn Sie den geringsten Abstand von der Schwenkachse 74 aufweisen, wie in Fig. 9 dargestellt, in einem Endbereich 134 der Gleitführungsbahnen 126 liegen, der nächstliegend zur ersten Schwenkachse 74 angeordnet ist.

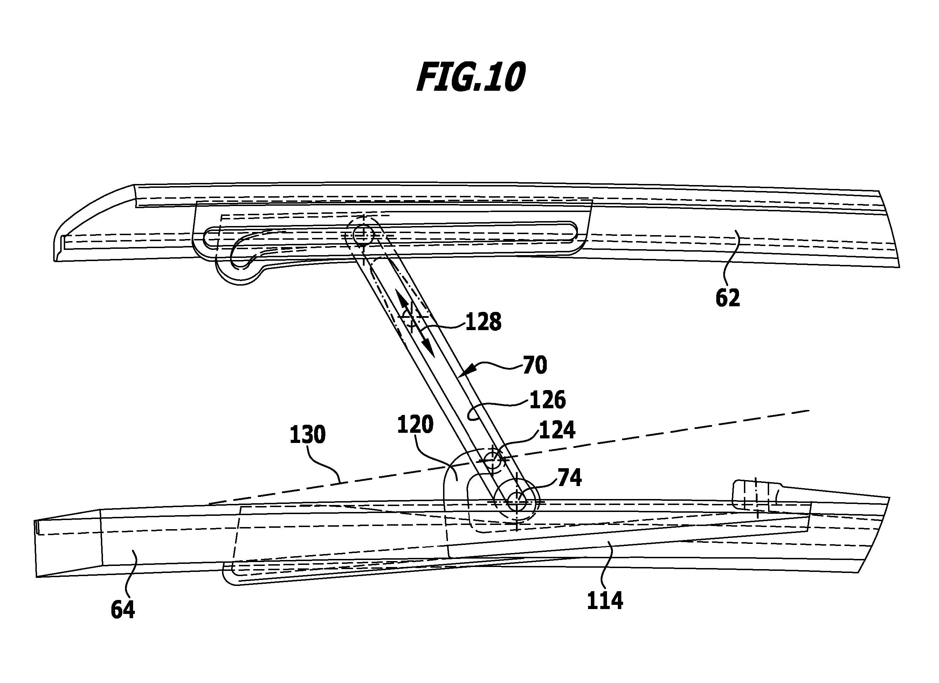

Somit führt ein Verschieben des Betätigungsarms 120 durch Verschieben des Verschiebeschlittens 114 dazu, dass entweder der Hubarm 70 in der eingefahrenen Stellung steht, wie in Fig. 6 und 7 dargestellt, oder sich ausgehend von dieser eingefahrenen Stellung in Richtung der ausgefahrenen Stellung bewegt, wie in den Fig. 8 bis 10 dargestellt, wobei beispielsweise der Betätigungsarm 120 so weit in Richtung der ersten Schwenkachse 74 bewegt wird, dass sich der jeweilige Hubarm 70 mit einem nahe 90° liegenden Winkel zur Einbaubasis 64 erstreckt, also quer, möglichst senkrecht zu dieser verläuft.

Um in der eingefahrenen Stellung den Hubarm 70 mit möglichst kleinem Winkel zur Einbaubasis 64 positionieren zu können, verläuft die Bahn 130 vorzugsweise zur Einbaubasis 64 geneigt, und zwar so, dass die Fortsätze 124 in der eingefahrenen Stellung in möglichst geringem Abstand zur Einbaubasis 64 angeordnet sind, während sich der Abstand der Fortsätze 124 von der Einbaubasis 64 mit zunehmender Bewegung in Richtung der ausgefahrenen Stellung vergrößert.

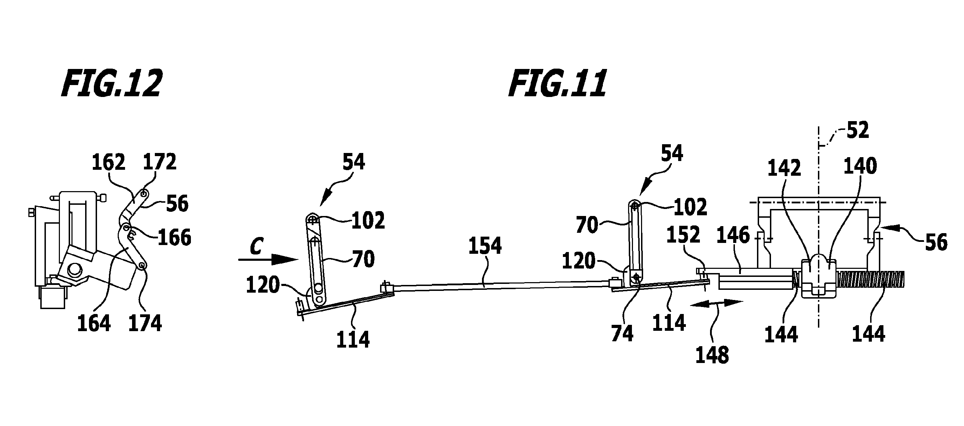

Die Funktion der gesamten Hubeinrichtung 50 lässt sich insbesondere anhand der schematischen Darstellungen gemäß Fig. 11, 13 und 15, ergänzt durch die Fig. 12, 14 und 16 erläutern.

Um ein motorisches Bewegen der einzelnen Hubeinheiten 54 zu ermöglichen, ist vorzugsweise eine zentrale Antriebseinheit 140 vorgesehen, welche beispielsweise einen Antriebsmotor 142 aufweist, der jeweils auf gegenüberliegenden Seiten der Längsmittelebene 52 sich erstreckende Antriebsspindeln 144 antreibt, die vorzugsweise quer, insbesondere senkrecht zur Längsmittelebene 52 verlaufen.

Auf diesen Antriebsspindeln 144 sitzen Spindelmuttern 146, welche sich beim Drehen der Antriebsspindeln in einer Vorschubrichtung 148 entweder von der Antriebseinheit 140 weg oder auf diese zu verschieben lassen.

Die jeweils beiderseits der Längsmittelebene angeordneten Spindelmuttern 146 sind über Kopplungsgestänge 152 und 154 mit den Verschiebeschlitten 114 der jeweils auf einer Seite der Längsmittelebene 52 liegenden Hubeinheiten 54 gekoppelt, so dass die jeweils auf einer Seite der Längsmittelebene 52 liegenden Verschiebeschlitten 114 und somit auch die Betätigungsarme 120 derselben sich gemeinsam und synchron entweder von der Längsmittelebene 52 weg oder auf diese zu verschieben lassen.

Sind, wie beispielsweise in Fig. 11 dargestellt, die Betätigungsarme 120 in ihre der Längsmittelebene 52 nächstliegende Stellung verschoben, so bewirken die an den Betätigungsarmen 120 angeordneten Fortsätze 124, dass sich die jeweiligen Hubarme 70 quer zu den Verschiebeschlitten 114 und somit auch quer zur Einbaubasis 64 erstrecken und in ihrer ausgefahrenen Stellung stehen, in welcher die Hubarme 70, ohne dass dies in Fig. 11 dargestellt ist, den Windabweiserkörper 42 in seiner maximal ausgefahrenen Stellung halten.

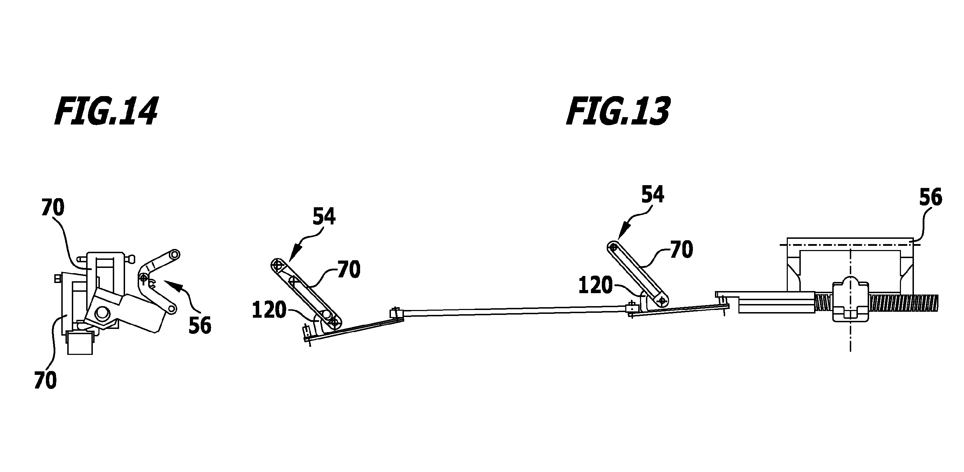

Werden nun durch Drehen der Antriebsspindeln 144 die Spindelmuttern 146 von der Längsmittelebene 52 weg verschoben, so bewegen sich auch die Betätigungsarme 120 mit den Fortsätzen 124 von der Längsmittelebene 52 weg und bewirken, wie beispielsweise in Fig. 13 dargestellt, eine zunehmende Neigung der Hubarme 70 der jeweiligen Hubeinheiten 54 und somit eine Verkleinerung des Winkels zwischen diesen und der Einbaubasis 64.

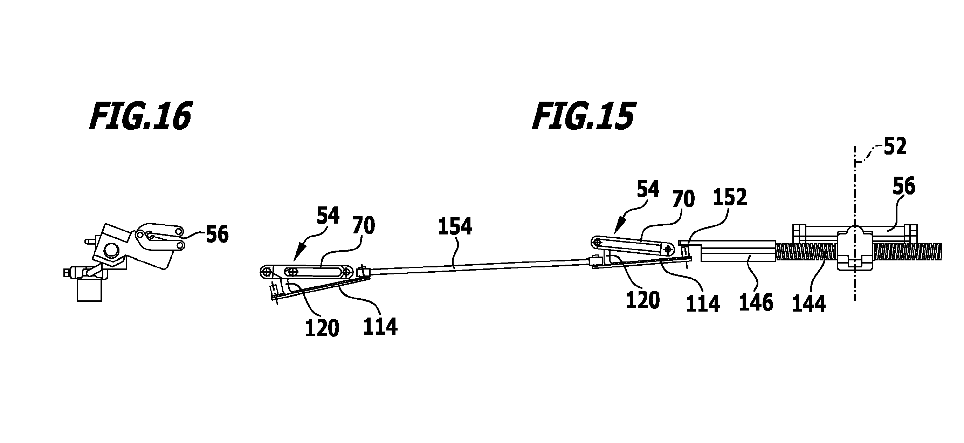

Die Bewegung der Betätigungsarme 120 erfolgt dabei so lange in Richtung von der Längsmittelebene 52 weg, bis die Betätigungsarme 70 der einzelnen Hubeinheiten 54, wie in Fig. 15 dargestellt, den kleinsten Winkel mit der Einbaubasis einschließen und somit den Windabweiserkörper 42 in die eingefahrene Stellung bewegen und in dieser halten, wobei in diesem Fall auch die Betätigungsarme 120 im maximalen Abstand von der Längsmittelebene 52 positioniert sind.

Ergänzend zu den Fig. 11, 13 und 15 lassen sich in den Fig. 12, 14 und 16 auch die Funktion der Führungseinheit 56 erläutern.

Die Führungseinheit 56 ist dabei so ausgebildet, dass diese zwei Kniehebelarme 162 und 164 umfasst, die ihrerseits durch ein Gelenk 166 mit einer Gelenkachse 168 verbunden sind, und andererseits an ihren äußeren Enden über Gelenke 172 und 174 mit Gelenkachsen 176 und 178 einmal mit dem Träger 62 und ein andermal mit der Einbaubasis 64 verbunden sind.

Dabei verlaufen die Gelenkachsen 168, 176 und 178 parallel zueinander und vorzugsweise quer zu den ersten Schwenkachsen 74, insbesondere senkrecht zu diesen, und somit vorzugsweise auch senkrecht zur Längsmittelebene 52.

Somit verhindert die Führungseinheit 56 aufgrund ihrer Anordnung und Wirkung zwischen dem Träger 62 des Windabweiserkörpers 42 und der Einbaubasis 64 eine Bewegung des Trägers 62 und des Windabweiserkörpers 42 relativ zur Einbaubasis 64 quer zur Längsmittelebene 52, da die Kniehebelarme 162 und 164 eine Bewegungen in Richtung der Gelenkachsen 168, 176 und 178 verhindern, während sie andere Bewegungen senkrecht zu den Gelenkachsen 168, 176 und 178 zulassen.

Diese anderen Bewegungen werden jedoch, insoweit als sie parallel zu den Schwenkachsen 74 und 102 verlaufen würden, durch die Hubeinheiten 54 verhindert, die aufgrund der Tatsache, dass die ersten Schwenkachsen 74 und die zweiten Schwenkachsen 102 quer zur Erstreckungsrichtung 66 des Trägers 62 und des Windabweiserkörpers 42 verlaufen.

Somit sind insgesamt aufgrund der Ausrichtung der Gelenkachsen 168, 176 und 178 der Führungseinheit 56 und der Schwenkachsen 74 und 102 der Hubeinheiten 54 relativ zueinander nur Bewegungen des Trägers 62 des Windabweiserkörpers 42 möglich, die senkrecht zu den Gelenkachsen 168, 176 und 178 und den Schwenkachsen 74 und 102 und somit quer zur Einbaubasis 64 in einer Heberichtung 180 verlaufen, die parallel zur Längsmittelebene 52 verläuft.

Durch die Ausrichtung der Gelenkachsen 168, 176 und 178 quer oder senkrecht zu den Schwenkachsen 74 und 102 der Hubeinheiten 54 wird somit sichergestellt, dass der Träger 62 mit dem Windabweiserkörper 42 in der Heberichtung 180 lediglich von der Einbaubasis 64 weg in die ausgefahrene Stellung und in Richtung der Einbaubasis 64, das heißt in die eingefahrene Stellung, bewegt werden kann.

## Patentansprüche

1. Windabweiser zum Einbau in ein Fahrzeugdach (18) in einem Frontbereich (24) des Fahrzeugdachs (18), umfassend einen sich in einer quer zu einer Fahrtrichtung (F) in einer Erstreckungsrichtung (66) erstreckenden Windabweiserkörper (42), eine Hubeinrichtung (50), mit welcher der Windabweiserkörper (42) zwischen einer in das Fahrzeugdach (18) eingefahrenen und einer aus dem Fahrzeugdach (18) ausgefahrenen und über eine Oberseitenkontur (46) des Fahrzeugdachs (18) überstehenden und somit windabweisenden Stellung bewegbar ist, wobei die Hubeinrichtung (50) mindestens eine Hubeinheit (54) mit einer Einbaubasis (64) und einem relativ zur Einbaubasis (64) mit einem Hubarmlager (80) um eine erste Schwenkachse (74) schwenkbar gelagerten Hubarm (70) aufweist, welcher an einem dem Hubarmlager (80) gegenüberliegenden Ende (76) am Windabweiserkörper (42) angreift,
**dadurch gekennzeichnet, dass** zur Bewegung des Hubarms (70) eine sich an der Einbaubasis (64) abstützende Betätigungseinheit (110) vorgesehen ist, welche am Hubarm (70) angreift, und dass zum Verschwenken des Hubarms (70) die Betätigungseinheit (110) und das Hubarmlager (80) relativ zueinander in einer quer zu der ersten Schwenkachse (74) des Hubarmlagers (80) verlaufenden Verschieberichtung (116) verschiebbar sind.

2. Windabweiser nach Anspruch 1, **dadurch gekennzeichnet, dass** die Betätigungseinheit (110) an einer Führungsbahn (126) des Hubarms (70) mit einem längs der Führungsbahn (126) verschiebbaren Führungselement (124) angreift und dass das Führungselement (124) zum Verschwenken des Hubarms (70) längs der Führungsbahn (126) bewegbar ist.

3. Windabweiser nach Anspruch 2, **dadurch gekennzeichnet, dass** das Führungselement (124) relativ zur Führungsbahn (126) verschwenkbar ist.

4. Windabweiser nach Anspruch 2 oder 3, **dadurch gekennzeichnet, dass** die Betätigungseinheit (110) einen das Führungselement (124) tragenden Betätigungsarm (120) aufweist, welcher sich ausgehend von einer Betätigungsbasis (114) erstreckt.

5. Windabweiser nach Anspruch 4, **dadurch gekennzeichnet, dass** der in der Verschieberichtung (116) relativ zum Hubarmlager (80) verschiebbare Verschiebeschlitten (114) die Betätigungsbasis bildet.

6. Windabweiser nach dem Oberbegriff des Anspruchs 1 oder nach einem der voranstehenden Ansprüche, **dadurch gekennzeichnet, dass** der Hubarm (70) mit seinem an dem Windabweiserkörper (42) angreifenden Ende (76) mittels eine Halteführung (78) mit dem Windabweiserkörper (42) gekoppelt ist und diesen relativ zur Einbaubasis (64) in den jeweiligen Stellungen hält.

7. Windabweiser nach Anspruch 6, **dadurch gekennzeichnet, dass** durch die Halteführung (78) der Hubarm (70) relativ zum Windabweiserkörper (42) um eine zur ersten Schwenkachse (74) parallele zweite Schwenkachse (104) schwenkbar ist.

8. Windabweiser nach Anspruch 7, **dadurch gekennzeichnet, dass** die zweite Schwenkachse (104) quer zur Erstreckungsrichtung (66) des Windabweiserkörpers (42) verläuft.

9. Windabweiser nach einem der voranstehenden Ansprüche, **dadurch gekennzeichnet, dass** die Halteführung (78) einerseits ein Schwenken des Hubarms (70) um die zweite Schwenkachse (102) und andererseits ein Bewegen der zweiten Schwenkachse (102) in Erstreckungsrichtung (66) des Windabweiserkörpers (42) erlaubt.

10. Windabweiser nach einem der Ansprüche 6 bis 9, **dadurch gekennzeichnet, dass** die Halteführung (78) eine Kulissenbahn (94) aufweist, längs welcher ein die zweite Schwenkachse (104) bildender Führungszapfen (92) bewegbar ist.

11. Windabweiser nach dem Oberbegriff des Anspruchs 1 oder nach einem der voranstehenden Ansprüche, **dadurch gekennzeichnet, dass** der Windabweiserkörper (42) durch eine Führungseinheit (56) geführt ist, welche eine Bewegung des Windabweiserkörpers (42) in der Erstreckungsrichtung (66) verhindert.

12. Windabweiser nach Anspruch 11, **dadurch gekennzeichnet, dass** Führungseinheit (56) eine Kniehebelführung (162, 164) aufweist.

13. Windabweiser nach einem der voranstehenden Ansprüche, **dadurch gekennzeichnet, dass** die Hubeinrichtung (50) mehrere Hubeinheiten (54) aufweist.

14. Windabweiser nach einem der voranstehenden Ansprüche, **dadurch gekennzeichnet, dass** die mindestens eine Hubeinheit (54) durch eine gemeinsame Antriebseinheit (140) antreibbar sind.

15. Windabweiser nach einem der voranstehenden Ansprüche, **dadurch gekennzeichnet, dass** die Antriebseinheit (140) in einem mittigen Bereich des Windabweisers angeordnet ist.
